Europäisches Patentamt

European Patent Office

Office européen des brevets

(19)

(11) EP 0 683 888 B1

(12) EUROPÄISCHE PATENTSCHRIFT

(45) Veröffentlichungstag und Bekanntmachung des Hinweises auf die Patenterteilung:
07.01.1998 Patentblatt 1998/02

(21) Anmeldenummer: 94906885.2

(22) Anmeldetag: 15.02.1994

(51) Int Cl.6: G01C 11/02, G03B 37/00, G01B 11/00

(86) Internationale Anmeldenummer:
PCT/DE94/00181

(87) Internationale Veröffentlichungsnummer:
WO 94/18524 (18.08.1994 Gazette 1994/19)

(54) **MESSKAMERAANORDNUNG, INSBESONDERE FÜR PHOTOGRAMMETRISCHE MESSUNGEN AN TECHNISCHEN OBJEKTEN**

PHOTOGRAMMETRIC CAMERA, IN PARTICULAR FOR PHOTOGRAMMETRIC MEASUREMENTS OF TECHNICAL OBJECTS

APPAREIL PHOTOGRAPHIQUE DE PHOTOGRAMMETRIE, UTILE NOTAMMENT POUR EFFECTUER DES MESURES PHOTOGRAMMETRIQUES D'OBJETS TECHNIQUES

(84) Benannte Vertragsstaaten:
AT BE CH DE FR GB LI LU NL

(30) Priorität: 15.02.1993 DE 4304529

(43) Veröffentlichungstag der Anmeldung:
29.11.1995 Patentblatt 1995/48

(73) Patentinhaber: Temacon Technology Marketing Consultans GmbH
30175 Hannover (DE)

(72) Erfinder: KELLNER, Helmut
D-26802 Moormerland (DE)

(74) Vertreter: Körner, Peter et al
Thömen & Körner
Zeppelinstrasse 5
30175 Hannover (DE)

(56) Entgegenhaltungen:
EP-A- 0 504 037          EP-A- 0 512 403
DE-A- 3 537 220          DE-A- 3 909 855

**Beschreibung**

Die Erfindung betrifft eine Meßkameraanordnung, insbesondere für photogrammetrische Messungen an technischen Objekten nach dem Oberbegriff des Anspruchs 1.

Meßkameraanordnungen dieser Art sind für photogrammetrische Messungen terrestrischer Objekte vom Boden oder von der Luft aus bekannt. Als Bildempfänger werden in der Regel lichtempfindliche Filme auf photochemischer Basis eingesetzt. Das übliche Filmformat beträgt 23 * 23 cm oder 13 * 18 cm und die Auflösung maximal 50 Linien/mm bei Schwarz/Weiß-Luftbildfilmen.

Um unter Berücksichtigung des Auflösungsvermögens weit auseinander liegende Objekte genau vermessen zu können, müssen mehrere überlappende Aufnahmen angefertigt werden, die unter Zuhilfenahme von Paßpunkten zu einem Gesamtbild zusammengesetzt werden. Ehe das endgültige Bild für Messungen und Analysen zur Verfügung steht, müssen die belichteten Filme entwickelt, gegebenenfalls entzerrt und die Teilbilder an den Paßpunkten zusammengesetzt werden.

Für die Vermessung technischer Objekte, z.B. für Bearbeitungsaufgaben durch Werkzeugmaschinen, ist dieser Aufwand und die Zeitspanne zwischen der Aufnahme und der Auswertemöglichkeit der Bilder unwirtschaftlich und unbefriedigend.

Wenn als Bildempfänger statt der photochemischen Filme optoelektronische Sensoren eingesetzt werden, deren Bildinformationen zwischengespeichert werden, entfällt zwar der Zeitaufwand für die Entwicklung des Filmmaterials, dafür wird aber eine immense Speicherkapazität zur Speicherung der Bildinformationen benötigt, was wiederum eine erhebliche Verarbeitungszeit des die Bildinformationen verarbeitenden Rechners zur Folge hat. Dadurch bietet auch der optoelektronische Ersatz des bekannten photochemischen Bildempfängers keine wirtschaftliche Alternative.

Gerade bei technischen Objekten kommt es aber nur auf die in Ausschnitten des Gesamtbildes liegenden Bildinformationen an, während die in den übrigen Ausschnitten liegenden Bildinformationen überflüssig sind.

Aus der EP 0 505 037 A2 ist eine Meßkameraanordnung bekannt, welche ein fokussierbares Objektiv und einen Sensor umfaßt. Eine Abstandsmeßvorrichtung ermöglicht die Messung des Abstandes zwischen dem Objektiv und dem Sensor. Der Sensor ist als horizontale CCD-Zeile ausgebildet und auf einer in vertikaler Richtung quer zur optischen Achse des Objektivs verschiebbaren Bühne angeordnet, so daß durch Verschieben der CCD-Zeile ein zweidimensionales Bild gescannt werden kann.

Ferner ist aus der DE 35 37 220 Al eine optoelektronische Kamera bekannt, bei der das Bild unter Verwendung von Linsen in Teilbilder zerlegt wird. Das von einem ersten Objektiv in einer Bildebene entworfene Bild wird durch weitere Linsen im Maßstab 1 : 1 auf die Oberflächen von CCD-Flächensensoren abgebildet. Hierdurch lassen sich zur Erfassung eines großformatigen Bildes handelsübliche kleinformatige Flächensensoren verwenden.

Schließlich ist aus der DE 39 09 855 C2 ein Lagegeber zur Bestimmung der Lage einer Abtasteranordnung relativ zu einer positionierbaren Fläche bekannt. Dabei werden auf einer positionierbaren Fläche in zwei Koordinatenrichtungen angeordnete Marken konstanten Abstandes mittels Abtastern ausgewertet, woraus alle drei Koordinatenrichtungen eines karthesischen Koordinatensystems bestimmt werden können.

Der Erfindung liegt die Aufgabe zugrunde, eine Meßkameraanordnung zu schaffen, welche unter Beibehaltung der Abbildungsauflösung die präzise Erfassung und schnelle Auswertung von Objekten ermöglicht, die nicht gleichzeitig auf einem Sensor abbildbar sind.

Diese Aufgabe wird bei einer Meßkameraanordnung nach dem Oberbegriff des Anspruchs 1 durch die im Kennzeichen angegebenen Merkmale gelöst.

Die erfindungsgemäße Meßkameraanordnung ermöglicht über die Kombination Sensor mit Sekundäroptik eine vergrößerte Abbildung des Objektes auf dem Sensor bei geringer Bautiefe. Da hierbei nur jeweils ein Ausschnitt der Bildebene der Primäroptik auf dem Sensor abgebildet wird, sind der Sensor und die Sekundäroptik quer zur optischen Achse der Primäroptik verschiebbar, so daß jeder beliebige Bereich der Bildebene der Primäroptik nacheinander erfaßt werden kann.

In die Gesamtauswertung werden die Abstände zwischen den einzelnen auf dem Sensor abgebildeten Abschnitte einbezogen, die durch hochauflösende Abstandsmeßvorrichtungen ermittelt werden. Die damit erzielbare Genauigkeit ist höher, als wenn die Abstände in üblicher Weise durch überlappende Zwischenbilder bestimmt werden müßten, die an Paßpunkten zusammengesetzt werden. Jede Paßpunktjustierung führt nämlich zu Fehlern, die sich bei einer Mehrzahl von Zwischenbildern kumulieren.

Durch diese Meßkameraanordnung werden die zu verarbeitenden Bildinformationen erheblich reduziert, da nur diejenigen Informationen verarbeitet werden müssen, die in den relevanten Ausschnitten liegen. Die außerhalb dieser Ausschnitte liegenden Bildinformationen, die bei bekannten Meßkameraanordnungen ausschließlich zu dem Zweck verarbeitet werden müssen, um die relative Lage der betrachteten Objekte zu ermitteln, bleiben außer Betracht. An ihre Stelle treten die von den Abstandsmeßvorrichtungen gelieferten Abstandsinformationen die nur ein sehr geringes Datenvolumen umfassen.

Für die Auswertung der Bildinformationen eignen sich somit übliche Mikrorechner, die das gewünschte Meßergebnis unmittelbar nach Durchführung der Aufnahmen zur Verfügung stellen und damit einen wirtschaftlichen Einsatz der Meßkameraanordnung für photogrammetrische Messungen an technischen Objekten ermöglichen.

Eine Weiterbildung der Erfindung sieht vor, daß mehrere hochauflösende Sensoren mit diesen zugeordneten Sekundäroptiken in einer Matrix angeordnet sind, die konstante Spaltenabstände und konstante Zeilenabstände aufweist.

Dadurch ist jedem Sensor nur ein Teilbereich der Bildebene der Primäroptik zugewiesen. Die maximal erforderlichen Verschiebewege der Sekundäroptiken und der Sensoren für die Erfassung beliebig auf der Bildebene der Primäroptik abgebildeter Objekte sind somit geringer. Dies verringert einmal die Breiten und Längenabmessungen der Meßkamera und reduziert zudem die Aufnahmezeit.

Die Sekundäroptiken können aus mehreren kaskadierten Einzeloptiken bestehen.

Diese Ausführung gestattet es, die Tiefenabmessungen der Meßkameraanordnung unter Beibehaltung eines gewünschten Vergrößerungsfaktors der Abbildung auf dem Sensor weiter zu verringern oder bei gleichen Tiefenabmessungen einen höheren Vergrößerungsfaktor der Abbildung auf dem Sensor zu erhalten. Ein höherer Vergrößerungsfaktor könnte zwar auch durch eine als Einzeloptik mit kleiner Brennweite aufgebaute Sekundäroptik erzielt werden, dies hat aber den Nachteil, daß Randunschärfen entstehen.

Bei einer ersten Ausführung sind die hochauflösenden Sensoren und die Sekundäroptiken auf einem gemeinsamen Schlitten angeordnet und gemeinsam verschiebbar.

Diese Ausführung hat neben einem mechanisch einfacheren Aufbau den Vorzug, daß nur eine gemeinsame Abstandsmeßvorrichtung für jede Kombination aus Sensor und Sekundäroptik benötigt wird.

Bei einer zweiten Ausführung sind die hochauflösenden Sensoren und die Sekundäroptiken auf separaten Schlitten angeordnet und unabhängig voneinander verschiebbar.

Hier ist zwar der Aufwand in mechanischer Hinsicht und wegen der weiteren Abstandsmeßvorrichtung höher, als Sensor sind aber keine Weitwinkelausführungen sondern kostengünstige Ausführungen mit kleiner Pixel- oder Bildpunktanzahl einsetzbar.

Die hochauflösenden Sensor können als CCD-Zeile oder als CCD-Fläche ausgebildet sein.

Der Einsatz von CCD-Zeilen ist unter wirtschaftlichen Aspekten besonders interessant, da CCD-Zeilen für die Anwendung in Handy-Scannern und Telefaxgeräten in hoher Stückzahl gefertigt werden und besonders preisgünstig erhältlich sind. Da bei einer Aufnahme die CCD-Zeile verschoben werden muß, erhöht sich allerdings die Aufnahmezeit. Die Abbildungsgenauigkeit des Objektes bei der Verschiebung wird nicht beeinträchtigt, da der Verschiebeweg von der ohnehin vorhandenen hochauflösenden Abstandsmeßvorrichtung genau erfaßt wird.

Demgegenüber ermöglicht der Einsatz von als CCD-Fläche ausgebildeten Sensoren eine kürzere Aufnahmezeit. CCD-Flächen sind jedoch wesentlich teurer als CCD-Zeilen.

Eine Weiterbildung sieht vor, daß der Primäroptik höchauflösende Raumlagenmeßvorrichtungen zugeordnet sind. Dabei sind die Raumlagenmeßvorrichtungen aus wenigstens drei, vorzugsweise vier gleichmäßig auf einer koaxial zur optischen Achsen der Primäroptik liegenden Mantelfläche angeordneten höchauflösende Abstandsmeßvorrichtungen ausgebildet.

Diese Raumlagenmeßvorrichtungen dienen dazu, Lageveränderungen der Primäroptik bei Fokussierbewegungen zu erfassen und im Meßergebnis zu berücksichtigen. Dabei kommt insbesondere der Lage der optischen Achse eine besondere Bedeutung zu, da sich die Abstandsmessungen der Sekundäroptiken und der Sensoren auf die optische Achse der Primäroptik beziehen. Wird die Primäroptik bei Fokussierbewegungen aufgrund von Ungenauigkeiten ihrer Führung gekippt, so wird auch die optische Achse ausgelenkt. Um das ermittelte Maß der Auslenkung können die auf eine Solllage der optischen Achse bezogenen Abstandsmeßwerte dann korrigiert werden.

Vorzugsweise sind die höchauflösenden Abstandsmeßvorrichtungen als Lagegeber zur Bestimmung der Lage einer Abtasteranordnung relativ zu einer positionierbaren Fläche ausgebildet mit positionierbaren Flächen an den Sekundäroptiken, den hochauflösenden Sensoren und der Primäroptik und Abtasteranordnungen an einem gemeinsamen Gehäuse oder umgekehrt. Dabei sind auf der positionierbaren Fläche in zwei Koordinatenrichtungen Marken konstanten Abstandes angeordnet und diesen Marken stehen Abtaster gegenüber, wobei die Abtaster mit einem Koordinatenrechner verbunden sind und wobei die Abtaster jeweils eine Winkelmeßvorrichtung umfassen, mittels der die Projektionswinkel zwischen einem Bezugspunkt der Winkelmeßvorrichtung des jeweiligen Abtasters und mindestens drei benachbart angeordneten Marken bestimmt werden. Der Rechner ist so gesteuert, daß er die Koordinaten des jeweiligen Bezugspunktes nach trigonometrischen Funktionen berechnet.

Mit dem verwendeten Lagegeber, der ausführlich in der DE-PS 39 09 855 beschrieben ist, kann die absolute Lage der gesamten positionierbaren Fläche unmittelbar erfaßt werden, und zwar in beiden Koordinatenrichtungen mit der gleichen Genauigkeit. Eine zur Feinbestimmung vorgenommene Interpolation zwischen den Marken ermöglicht es, daß die für eine gewünschte Auflösung in einer Koordinatenrichtung an sich erforderliche Dichte der Marken verringert werden kann. Die Berechnung liefert dabei auch den Abstand zwischen der positionierbaren Fläche und dem Bezugspunkt, der als dritte Koordinate, die senkrecht auf den beiden in der positionierbaren Fläche liegenden Koordinaten steht, angeben werden kann.

Der Rechner kann dabei als trigonometrische Funktionen folgende Funktionen oder Gleichungen verarbeiten:

$$X_0; Y_0 = \frac{\Delta * (Z_1^2 - Z2^2)}{(Z_1 - Z2)^2 + \Delta^2}$$

$$Z_0 = \frac{\Delta^2 * (Z1 + Z2)}{(Z1 - Z2)^2 + \Delta^2}$$

wobei

$$Z_1 = \frac{\Delta}{2 * \tan \alpha}$$

wobei

$$Z_2 = \frac{\Delta}{2 * \tan \beta}$$

sind, $\alpha$ den Projektionswinkel zwischen einem zugehörigen Bezugspunkt sowie einer ersten und einer zweiten benachbarten Marke, $\beta$ den Projektionswinkel zwischen dem zugehörigen Bezugspunkt und einer zweiten sowie einer dritten benachbarten Marke bezeichnet, $\Delta$ der Abstand zwischen zwei benachbarten Marken ist und X0, Y0, Z0 die Koordinaten des zugehörigen Bezugspunktes relativ zur positionierbaren Fläche darstellen.

Die Berechnungen lassen sich mit üblichen Rechnern schnell und exakt durchführen, so daß auch nach Verschiebungen aktualisierte Meßwerte praktisch ohne Meßverzögerung vorliegen.

Weiterbildungen und vorteilhafte Ausgestaltungen der Erfindung ergeben sich aus den Ansprüchen, der weiteren Beschreibung und der Zeichnung.

Nachfolgend wird ein Ausführungsbeispiel der Erfindung anhand der Zeichnung erläutert.

In der Zeichnung zeigen:

Fig. 1 einen Längsschnitt durch eine Meßkameraanordnung in einer ersten Ausführung,

Fig. 2 einen Längsschnitt durch eine Meßkameraanordnung in einer zweiten Ausführung mit als kaskadierte Einzeloptiken ausgebildeten Sekundäroptiken,

Fig. 3 eine Draufsicht auf eine Matrix, in der Sensoren und Sekundäroptiken angeordnet sind,

Fig. 4 eine schematische Darstellung einer Abstandsmeßvorrichtung,

Fig. 5 eine Abtasteranordnung der Abstandsmeßvorrichtung und

Fig. 6 eine geometrische Darstellung der Projektionswinkel der Abtasteranordnung.

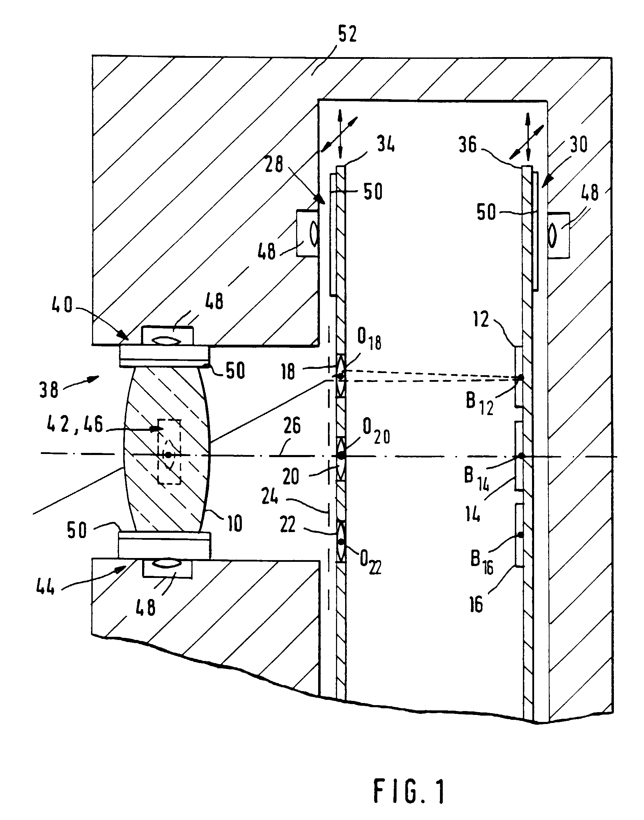

Fig. 1 zeigt einen Längsschnitt durch eine Meßkameraanordnung in einer ersten Ausführung. Sie umfaßt eine fokussierbare Primäroptik 10, die ein Objekt auf einer Bildebene 24 abbildet. Im Gegensatz zu üblichen Meßkameraanordnungen für photogrammetrische Messungen befindet sich in der Bildebene selbst kein Sensor. Vielmehr ist hinter der Bildebene 24 eine Kombination aus mehreren hochauflösenden Sensoren 12, 14, 16 und mit diesen zugeordneten Sekundäroptiken 18, 20, 22 angeordnet. Jede Sekundäroptik 18, 20, 22 bildet einen Ausschnitt der Bildebene 24 der Primäroptik 10 vergrößert auf dem zugehörigen hochauflösenden Sensor 12, 14, 16 ab.

Die Sekundäroptiken 18, 20, 22 und Sensoren 12, 14, 16 sind fest auf die Bildebene 24 eingestellt. Zur Entfernungsanpassung an das abzubildende Objekt muß daher nur die Primäroptik 10 verändert werden.

Damit die Sensoren 12, 14, 16 jeden beliebigen Ausschnitt der Bildebene 24 der Primäroptik 10 aufnehmen können, sind sie und die Sekundäroptiken 18, 20, 22 quer zur optischen Achse 26 der Primäroptik 10 auf Schlitten 34 und 36 verschiebbar angeordnet. Die Schlitten 34 und 36 ermöglichen eine zweiachsige Verschiebung. Neben der dargestellten Variante mit zwei unabhängig voneinander verschiebbaren Schlitten 34 und 36 ist es auch möglich, die Schlitten zu koppeln oder nur einen gemeinsamen Schlitten 34 vorzusehen. Die Verschiebebewegungen werden von hier nicht dargestellten Antrieben oder auch manuell vorgenommen. Als Sensoren 12, 14, 16 können sowohl CCD-Zeilen als auch CCD-Flächen eingesetzt werden.

Zur Erfassung der Verschiebebewegungen dienen Abstandsmeßvorrichtungen 28, 30, die den hochauflösenden Sensoren 12, 14, 16 und den Sekundäroptiken 18, 20, 22 zugeordnet sind. Diese Abstandsmeßvorrichtungen 28, 30 erfassen zweidimensional den Abstand zwischen den Projektionszentren $O_{18}$, $O_{20}$, $O_{22}$ der Sekundäroptiken 18, 20, 22 und Bezugspunkten $B_{12}$, $B_{14}$, $B_{16}$ der hochauflösenden Sensoren 12, 14, 16 einerseits und der optischen Achse 26 der Primäroptik 10 andererseits.

Der Primäroptik 10 sind Raumlagenmeßvorrichtungen 38 zugeordnet, die insbesondere zur Erfassung der Lage und Neigung der optischen Achse der Primäroptik 10 dienen. Diese Raumlagenmeßvorrichtungen 38 bestehen aus vier gleichmäßig auf einer koaxial zur optischen Achse 26 der Primäroptik 10 liegenden Mantelfläche angeordneten höchauflöseauflösenden Abstandsmeßvorrichtungen 40, 42, 44, 46. Die Abstandsmeßvorsmeßvorrichtungen 28, 30 für die hochauflösenden Sensoren 12, 14, 16 und die Sekundäroptiken 18, 20, 22 wie auch die Abstandsmeßvorrichtungen 40, 42, 44, 46 für die Raumlagenmeßvorrichtungen 38 der Primäroptik 10 sind als Lagegeber zur Bestimmung der Lage einer Abtasteranordnung 48 relativ zu einer positionierbaren Fläche 50 ausgebildet.

Dabei sind die positionierbaren Flächen 50 der Lagegeber an den Sekundäroptiken 18, 20, 22, den hochauflösenden Sensoren 12, 14, 16 oder deren Schlitten 34, 36 und der Primäroptik 10 und die Abtasteranordnungen 48 an einem gemeinsamen Gehäuse 52 angebracht. Auch eine umgekehrte Anordnung ist möglich. Das Gehäuse 52 und die positionierbaren Flächen 50 bestehen aus einem Material mit niedrigem Temperaturausdehnungskoeffizienten, vorzugsweise aus Invar oder Zerodur.

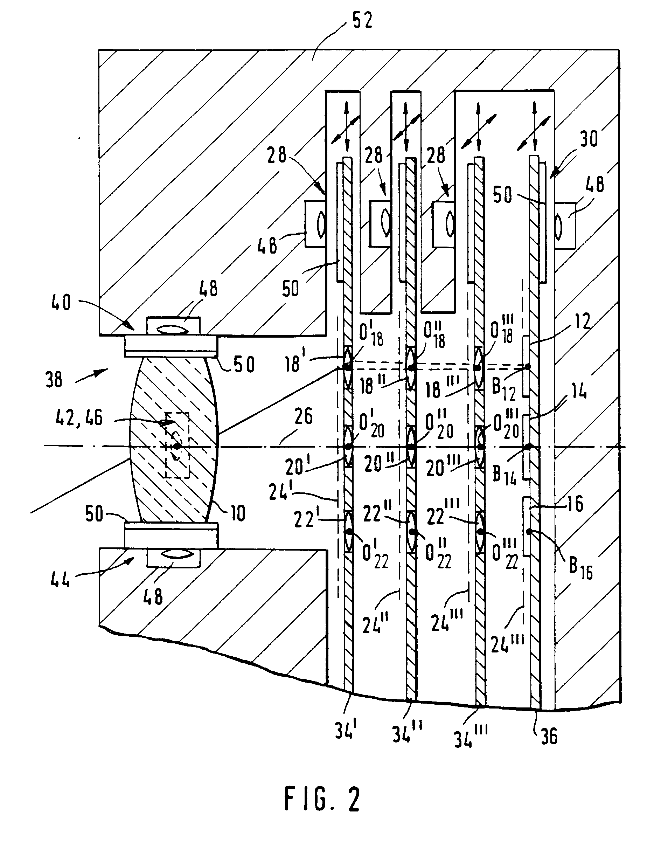

Fig. 2 zeigt einen Längsschnitt durch eine Meßkameraanordnung in einer zweiten Ausführung. Die Sekundäroptiken 18, 20, 22 bestehen hier aus mehreren kaskadierten Einzeloptiken 18', 18'', 18''', 20', 20'', 20''', 22', 22'', 22'''. In jeder Stufe dieser Kaskade wird ein Ausschnitt der im Strahlengang vor der jeweiligen Einzeloptik liegenden Bildebene vergrößert auf einer hinter der Einzeloptik liegenden Bildebene abgebildet. Die Einzeloptiken 18', 20', 22' bilden also Ausschnitte der Bildebene 24' vergrößert auf einer Bildebene 24'' ab, die Einzeloptiken 18'', 20'', 22'' wiederum bilden Ausschnitte der Bildebene 24'' vergrößert auf einer Bildebene 24''' ab usw. In der Bildebene 24'''' liegen schließlich die Sensoren 12, 14, 16. Bei dieser Ausführung liegen die Einzeloptiken 18', 20', 22', 18'', 20'', 22'' und 18''', 20''', 22''' jeweils auf Schlitten 34', 34'' und 34'''. Den Einzeloptiken bzw. Schlitten sind jeweils hochauflösende Abstandsmeßvorrichtungen 28', 28'' und 28''' zugeordnet. In seinen übrigen Merkmalen entspricht die Ausführung der in Fig. 1 dargestellten.

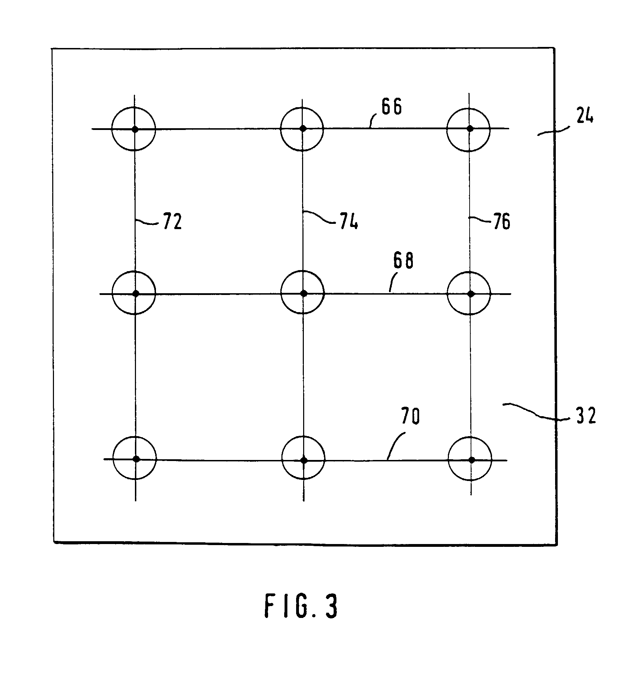

Fig. 3 zeigt eine Draufsicht auf eine Matrix 32, in der Sensoren und Sekundäroptiken angeordnet sind. Die Matrix 32 umfaßt in diesem Ausführungsbeispiel drei Zeilen 66, 68, 70 und drei Spalten 72, 74, 76 mit gleichen Abständen. In den Schnittpunkten der Zeilen 66, 68, 70 und Spalten 72, 74, 76 liegen die Projektionszentren der Sekundäroptiken und die Bezugspunkte der Sensoren. Bezogen auf die nutzbare Abbildungsfläche der Bildebene 24 sind die Abstände der Zeilen 66, 68, 70 und Spalten 72, 74, 76 so bemessen, daß durch Verschiebung der Matrix 32 um den halben Spalten- und Zeilenabstand jeweils in positiver und negativer X- und Y-Koordinatenrichtung die gesamte nutzbare Abbildungsfläche der Bildebene 24 erfaßt werden kann.

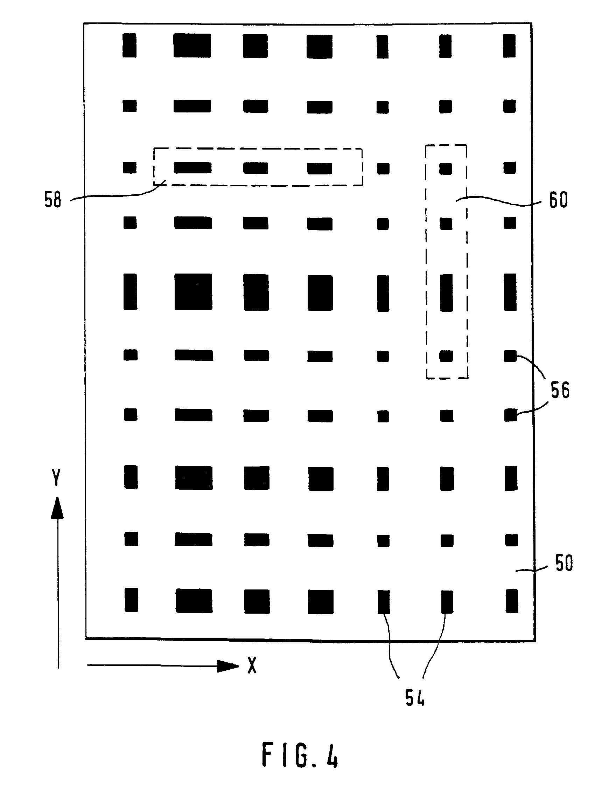

Fig. 4 zeigt eine schematische Darstellung einer Abstandsmeßvorrichtung. Auf einer positionierbaren Fläche 50 sind in zwei Koordinatenrichtungen X, Y Marken 54, 56 konstanten Abstandes mit einer Absolutkodierung angeordnet. Die Marken 54, 56 besitzen unterschiedliche Strichbreiten mittels der ihre Koordinaten kodiert sind. Die Dekodierung der Strichbreite mehrerer nebeneinander liegender Marken 54, 56 enthaltenden Kodes ermöglicht es, die absoluten Koordinaten der Marken anzugeben. Die Marken sind in der jeweiligen Koordinatenquerrichtung nicht durchgezogen, sondern es sind nur die Überschneidungsbereiche dargestellt. Es ergibt sich so ein Muster aus Rechtecken unterschiedlicher Seitenlängen.

Der positionierbaren Fläche 50 stehen Abtaster 58, 60 gegenüber, welche jeweils eine der Koordinatenrichtungen X oder Y auswerten.

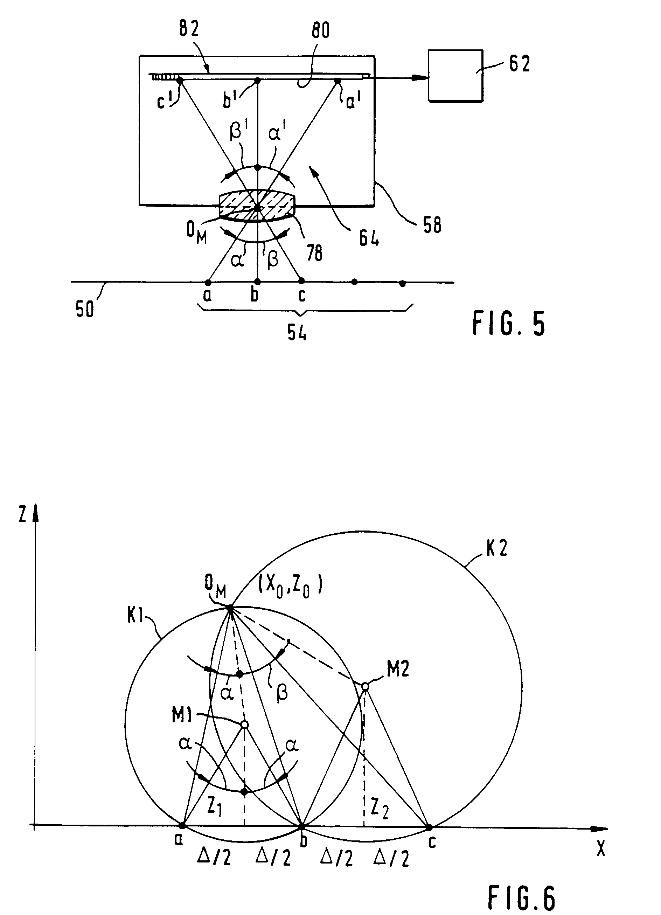

Fig. 5 zeigt eine Abtasteranordnung 48 der Abstandsmeßvorrichtung für eine Koordinatenrichtung. Diese umfaßt einen Fläche 50 mit Marken 54, von denen einzelne Marken hier mit a, b und c bezeichnet sind. Ein Abtaster 58 befindet sich oberhalb der Fläche 50 und dekodiert die in den Marken 54 verschlüsselten Längeninformationen. Mit Hilfe einer Winkelmeßvorrichtung 64 können Projektionswinkel, die sich zwischen den Marken 54 und einem Abtasterortspunkt $O_M$ des Abtasters 58 ergeben, ermittelt werden.

Der Abtaster 58 ist als optischer Abtaster ausgebildet und umfaßt eine Abbildungsoptik 78 mit einer Projektionsfläche 80 sowie einer Abstandsmeßeinrichtung 82. Bei diesem Abtaster ist ein Abtasterortspunkt $O_M$ durch das der Fläche 50 zugewandte Projektionszentrum der Abbildungsoptik 78 gebildet. Die Projektionsfläche 80 ist durch ein Diodenarray, z. B. in Gestalt einer CCD-Zeile gebildet. Die Anzahl der Pixel ist so gewählt, daß die Marken 54 in ihrer Breite aufgelöst werden können und mit Hilfe eines Rechners 62 dekodierbar sind.

Die Interpolation zwischen den Marken 54 wird mittels der Winkelmeßvorrichtung 64 vorgenommen. Wie aus der Zeichnung ersichtlich, werden hier als Beispiel die Marken a, b und c, welche zum Abtasterortspunkt $O_M$ die Winkel $\alpha$ bzw. $\beta$ einnehmen, unter dem Winkel $\alpha'$ und $\beta'$ auf die Punkte a', b' und c' der Projektionsfläche 80 abgebildet.

Dort wird mittels der Abstandsmeßeinrichtung 82 jeweils der Projektionswinkel über die Abstandsmessung der Projektionspunkte a', b' und c' auf der Projektionsfläche 80 ermittelt. Besitzt die Abstandsmeßeinrichtung 82 z.B. eine CCD-Zeile, so werden an den Stellen, an denen die Marken auf dieser Zeile abgebildet werden, Ladungsänderungen bewirkt, die von dem Rechner 62 in entsprechende Winkelwerte $\alpha$ und $\beta$ umgerechnet werden können.

Aus den Projektionswinkeln $\alpha$ und $\beta$ lassen sich unter Anwendung trigonometrischer Funktionen die Koordinaten des Abtasterortspunktes $O_M$, der hier mit dem Projektionszentrum in der Abbildungsoptik 78 übereinstimmt, ermitteln.

Zur Erläuterung der Rechenschritte wird auf Fig. 6 Bezug genommen, die eine geometrische Darstellung der Projektionswinkel der Abtasteranordnung 48 zeigt. Aus der Darstellung gemäß Fig. 5 sind nur die Marken a, b, c und der Abtasterortspunkt $O_M$ übernommen sind. In diesem Fall befindet sich aber der Abtasterortspunkt $O_M$ nicht direkt über der Marke b, um hier auch zeichnerisch zu veranschaulichen, daß jede beliebige Position des Abtasterortspunktes $O_M$ bestimmt werden kann.

Zwischen dem Abtasterortspunkt OM und den Marken a und b ist der Projektionswinkel a und zwischen dem Abtasterortspunkt $O_M$ und den Marken b und c der Projektionswinkel $\beta$ eingeschlossen. Die Abstände der Marken a, b und c betragen jeweils ^. Betrachtet man einmal die Winkel $\alpha$ und $\beta$ für sich, so gibt es verschiedene Punkte, die den gleichen Projektionswinkel $\alpha$ und $\beta$ einnehmen. Diese Punkte befinden sich auf einer Ortskurve, die für den Winkel $\alpha$ durch einen Kreis K 1 und für den Winkel $\beta$ durch einen Kreis K 2 dargestellt sind. Kombiniert man die beiden Winkel $\alpha$ und $\beta$, so gibt es nur einen realen Punkt, bei dem die Bedingung erfüllt ist. Dieser Punkt ist durch die Schnittpunkte der beiden Ortskurven, also der Kreise K 1 und K 2 gegeben.

Die Mittelpunkte M 1 und M 2 der Kreise K 1 und K 2 lassen sich so bestimmen, daß die Mittelsenkrechten zwischen den Marken a und b einerseits und b und c andererseits bestimmt werden und hier die Schnittpunkte mit Linien erhalten werden, welche jeweils unter dem Projektionswinkel, also $\alpha$ oder $\beta$, durch die Marken a und b bzw. b und c laufen.

Für die Abstände der Mittelpunkte M 1 und M 2 von der Maßstabsachse, also die Z-Koordinate der Mittelpunkte M 1 und M 2 ergeben sich:

$$Z1 = \frac{\Delta}{2 * \tan \alpha}$$

und

$$Z2 = \frac{\Delta}{2 * \tan \beta}$$

Durch mathematische Ableitungen ergeben sich für:

$$X_0 = \frac{\Delta * (Z1^2 - Z2^2)}{(Z1 - Z2)^2 + \Delta^2}$$

und für

$$Z_0 = \frac{\Delta^2 * (Z1 + Z2)}{(Z1 - Z2)^2 + \Delta^2}$$

Diese Gleichungen führen also zu einer eindeutigen Lösung und lassen sich mit üblichen Rechnern innerhalb kürzester Zeit bestimmen. Analog werden so auch die Koordinaten für die andere Koordinatenrichtung bestimmt.

**Patentansprüche**

1. Meßkameraanordnung, insbesondere für photogrammetrische Messungen an technischen Objekten, bestehend aus einem fokussierbaren Objektiv und mindestens einem quer zu dessen optischer Achse verschiebbaren, hochauflösenden Sensor und einer Abstandsmeßvorrichtung, dadurch gekennzeichnet, daß das fokussierbare Objektiv eine Primäroptik (10) darstellt, daß der hochauflösende Sensor (12, 14, 16) eine als Sekundäroptik (18, 20, 22) dienende Linseneinheit umfaßt, die einen Ausschnitt der Bildebene (24) der Primäroptik (10) vergrößert auf dem dieser Linseneinheit zugeordneten, hochauflösenden Sensor (12, 14, 16) abbildet, daß die Sekundäroptik (18, 20, 22) und der hochauflösende Sensor (12, 14, 16) quer zur optischen Achse (26) der Primäroptik (10) verschiebbar angeordnet sind und daß der Sekundäroptik (18, 20, 22) und dem hochauflösenden Sensor (12, 14, 16) höchauflösende Abstandsmeßvorrichtungen (28, 30) zugeordnet sind, welche den Abstand zwischen dem Projektionszentrum ($O_{18}$, $O_{20}$, $O_{22}$) der Sekundäroptik (18, 20, 22) und einem Bezugspunkt ($B_{12}$, $B_{14}$, $B_{16}$) des hochauflösenden Sensors (12, 14, 16) einerseits sowie zwischen dem Projektionszentrum ($O_{18}$, $O_{20}$, $O_{22}$) und der optischen Achse (26) der Primäroptik (10) andererseits erfassen.

2. Meßkameraanordnung nach Anspruch 1, dadurch gekennzeichnet, daß mehrere hochauflösende Sensoren (12, 14, 16) mit diesen zugeordneten Sekundäroptiken (18, 20, 22) in einer Matrix (32) angeordnet sind, die konstante Spaltenabstände und konstante Zeilenabstände aufweist.

3. Meßkameraanordnung nach Anspruch 1 oder 2, dadurch gekennzeichnet, daß die Sekundäroptiken (18, 20, 22) aus mehreren kaskadierten Einzeloptiken (18', 18'', 18''', 20', 20'', 20''', 22', 22'', 22''') bestehen.

4. Meßkameraanordnung nach einem der Ansprüche 1 bis 3, dadurch gekennzeichnet, daß die hochauflösenden Sensoren (12, 14, 16) und die Sekundäroptiken (18, 20, 22) auf einem gemeinsamen Schlitten (34) angeordnet und gemeinsam verschiebbar sind.

5. Meßkameraanordnung nach einem der Ansprüche 1 bis 3, dadurch gekennzeichnet, daß die hochauflösenden Sensoren (12, 14, 16) und die Sekundäroptiken (18, 20, 22) auf separaten Schlitten (34, 36) angeordnet und unabhängig voneinander verschiebbar sind.

6. Meßkameraanordnung nach einem der Ansprüche 1 bis 5, dadurch gekennzeichnet, daß die hochauflösenden Sensoren (12, 14, 16) als CCD-Zeile ausgebildet sind.

7. Meßkameraanordnung nach einem der Ansprüche 1 bis 5, dadurch gekennzeichnet, daß die hochauflösenden Sensoren (12, 14, 16) als CCD-Fläche ausgebildet sind.

8. Meßkameraanordnung nach einem der Ansprüche 1 bis 7, dadurch gekennzeichnet, daß der Primäroptik höchauflösende Raumlagenmeßvorrichtungen (38) zugeordnet sind.

9. Meßkameraanordnung nach Anspruch 8, <u>dadurch gekennzeichnet</u>, daß die Raumlagenmeßvorrichtungen (38) aus wenigstens drei, vorzugsweise vier gleichmäßig auf einer koaxial zur optischen Achse (26) der Primäroptik (10) liegenden Mantelfläche angeordneten höchauflösende Abstandsmeßvorrichtungen (40, 42, 44, 46) ausgebildet sind.

10. Meßkameraanordnung nach einem der Ansprüche 1 bis 9, <u>dadurch gekennzeichnet</u>, daß die höchauflösenden Abstandsmeßvorrichtungen (28, 30, 40, 42, 44, 46) als Lagegeber zur Bestimmung der Lage einer Abtasteranordnung (48) relativ zu einer positionierbaren Fläche (50) ausgebildet sind mit positionierbaren Flächen (50) an den Sekundäroptik (en) (18, 20, 22), den hochauflösenden Sensoren (12, 14, 16) und der Primäroptik (10) und Abtasteranordnungen (48) an einem gemeinsamen Gehäuse (52) oder umgekehrt, wobei auf der positionierbaren Fläche (50) in zwei Koordinatenrichtungen (X, Y) Marken (54, 56) konstanten Abstandes mit einer Absolutkodierung angeordnet sind und diesen Marken (54, 56) Abtaster (58, 60) gegenüberstehen, wobei die Abtaster (58, 60) mit einem Koordinatenrechner (62) verbunden sind und wobei die Abtaster (58, 60) jeweils eine Winkelmeßvorrichtung (64) umfassen, mittels der die Projektionswinkel ($\alpha$, $\beta$) zwischen einem Bezugspunkt ($O_M$) der Winkelmeßvorichtung (64) des jeweiligen Abtasters (58; 60) und mindestens drei benachbart angeordneten Marken (A, B, C) bestimmt werden und der Rechner (62) so gesteuert ist, daß er die Koordinaten (X0 bzw. Y0 und dazu gehörend Z0) des jeweiligen Bezugspunktes ($O_M$) nach trigonometrischen Funktionen berechnet.

11. Meßkameraanordnung nach Anspruch 10, <u>dadurch gekennzeichnet</u>, daß der Rechner (64) als trigonometrische Funktionen folgende Funktionen oder Gleichungen verarbeitet:

$$X_0; Y_0 = \frac{\Delta * (Z_1^2 - Z2^2)}{(Z_1 - Z2)^2 + \Delta^2}$$

$$Z_0 = \frac{\Delta^2 * (Z1 + Z2)}{(Z1 - Z2)^2 + \Delta^2}$$

wobei

$$Z_1 = \frac{\Delta}{2 * \tan \alpha}$$

wobei

$$Z_2 = \frac{\Delta}{2 * \tan \beta}$$

sind, $\alpha$ den Projektionswinkel zwischen einem zugehörigen Bezugspunkt sowie einer ersten und einer zweiten benachbarten Marke, $\beta$ den Projektionswinkel zwischen dem zugehörigen Bezugspunkt und einer zweiten sowie einer dritten benachbarten Marke bezeichnet, $\Delta$ der Abstand zwischen zwei benachbarten Marken ist und X0, Y0, Z0 die Koordinaten des zugehörigen Bezugspunktes relativ zur positionierbaren Fläche darstellen.

**Claims**

1. Measuring camera arrangement, particularly for photogrammetric measurements on technical objects, comprising a focusable objective and at least one high resolution sensor displaceable transversely to its optical axis, as well as a rangefinder, characterized in that the focusable objective constitutes a primary optics (10), that the high resolution sensor (12, 14, 16) comprises a lens unit serving as a secondary optics (18, 20, 22) which magnifies a detail of the image plane (24) of the primary optics (10) and images it on the high resolution sensor (12, 14, 16) associated with said lens unit, that the secondary optics (18, 20, 22) and the high resolution sensor (12, 14, 16) are arranged displaceably transversely to the optical axis (26) of the primary optics (10) and that with the secondary optics (18, 20, 22) and the high resolution sensor (12, 14, 16) are associated high resolution rangefinders (28, 30), which detect the distance between the perspective centre ($O_{18}$, $O_{20}$, $O_{22}$) of the secondary optics (18, 20, 22) and a reference point ($B_{12}$, $B_{14}$, $B_{16}$) of the high resolution sensor (12, 14, 16) on the one hand and between the perspective centre ($O_{18}$, $O_{20}$, $O_{22}$) and the optical axis (26) of the primary optics (10) on the other.

2. Measuring camera arrangement according to claim 1, characterized in that several high resolution sensors (12, 14, 16) with secondary optics (18, 20, 22) associated therewith are placed in a matrix (32) having constant column spacings and constant row spacings.

3. Measuring camera arrangement according to claim 1 or 2, characterized in that the secondary optics (18, 20, 22) comprise several cascaded individual optics (18', 18", 18"', 20', 20", 20"', 22', 22", 22"').

4. Measuring camera arrangement according to one of the claims 1 to 3, characterized in that the high resolution sensors (12, 14, 16) and secondary optics (18, 20, 22) are placed on a common slide (34) and are jointly displaceable.

5. Measuring camera arrangement according to one of the claims 1 to 3, characterized in that the high resolution sensors (12, 14, 16) and secondary optics (18, 20, 22) are placed on separate slides (34, 36) and are displaceable independently of one another.

6. Measuring camera arrangement according to one of the claims 1 to 5, characterized in that the high resolution sensors (12, 14, 16) are constructed as a CCD row.

7. Measuring camera arrangement according to one of the claims 1 to 5, characterized in that the high resolution sensors (12, 14, 16) are constructed as a CCD surface.

8. Measuring camera arrangement according to one of the claims 1 to 7, characterized in that with the primary optics are associated high resolution space position measuring devices (38).

9. Measuring camera arrangement according to claim 8, characterized in that the space position measuring devices (38) are constructed from at least three and preferably four high resolution rangefinders (40, 42, 44, 46) uniformly placed on a circumferential surface coaxial to the optical axis (26) of the primary optics (10).

10. Measuring camera arrangement according to one of the claims 1 to 9, characterized in that the high resolution rangefinders (28, 30, 40, 42, 44, 46) are constructed as position indicators for determining the position of the scanner system (48) relative to a positionable surface (50) on the secondary optics (18, 20, 22), the high resolution sensors (12, 14, 16) and the primary optics (10) and scanner systems (48) on a common casing (52) or vice versa, in which on the positionable surface (50) in two coordinate directions (X, Y) are provided marks (54, 56) with a constant spacing and absolute coding and said marks (54, 56) are faced by scanners (58, 60), the scanners (58, 60) being connected to coordinate computers (62) and the scanners (58, 60) in each case comprise an angle measuring device (64), by means of which it is possible to determine the projection angles $(\alpha, \beta)$ between a reference point $(O_M)$ of the angle measuring device (64) of the particular scanner (58, 60) and at least three adjacent marks (A, B, C) and the computer (62) is so controlled that it calculates the coordinates (X0 or Y0 and relative thereto Z0) of the reference point $(O_M)$ according to trigonometric functions.

11. Measuring camera arrangement according to claim 10, characterized in that the computer (62) processes as trigonometric functions the following functions or equations:

$$X_0; Y_0 = \frac{\Delta * (Z_1^2 - Z2^2)}{(Z_1 - Z2)^2 + \Delta^2}$$

$$Z_0 = \frac{\Delta^2 * (Z1 + Z2)}{(Z1 - Z2)^2 + \Delta^2}$$

in which

$$Z_1 = \frac{\Delta}{2 * \tan \alpha}$$

in which

$$Z_2 = \frac{\Delta}{2 * \tan \beta}$$

$\alpha$ is the projection angle between an associated reference point, as well as a first and a second neighbouring mark, $\beta$ is the projection angle between the associated reference point and a second, as well as a third neighbouring mark, $\Delta$ is the distance between two neighbouring marks and X0, Y0 and Z0 are the coordinates of the associated reference point relative to the positionable surface.

**Revendications**

1. Appareil photographique de photogrammétrie, en particulier destiné à des mesures photogrammétriques d'objets techniques, comprenant un objectif focalisable, au moins un capteur à haute résolution pouvant être décalé perpendiculairement à son axe optique et un dispositif de mesure de distance, caractérisé en ce que l'objectif focalisable comporte une optique primaire (10), en ce que le capteur à haute résolution (12, 14, 16) comprend un élément lentille servant d'optique secondaire (18, 20, 22) qui forme l'image agrandie sur le capteur à haute résolution (12, 14, 16) correspondant à cet élément lentille d'un détail du plan image (24) de l'optique primaire (10), en ce que les optiques secondaires (18, 20, 22) et le capteur à haute résolution (12, 14, 16) sont montés pour pouvoir être décalés perpendiculairement à l'axe optique (26) de l'optique primaire (10) et en ce qu'aux optiques secondaires (18, 20, 22) et au capteur à haute résolution (10, 12, 14) sont affectés des dispositifs de mesure à haute résolution (28, 30) qui détectent , d'une part, la distance comprise entre le centre de projection $(O_{18}, O_{20}, O_{22})$ de l'optique secondaire (18, 20, 22) et un point

de référence (B_12, B_14, B_16) du capteur à haute résolution (12, 14, 16) et, d'autre part, entre le centre de projection (O_18, O_20, O_22) et l'axe optique (26) de l'optique primaire (10).

2. Appareil photographique de photogrammétrie suivant la revendication 1, caractérisé en ce que plusieurs capteurs à haute résolution (12, 14, 16) avec leurs optiques secondaires correspondantes (18, 20, 22) sont disposés dans une matrice (32) qui présente des distances de rangées constantes et des distances de lignes constantes.

3. Appareil photographique de photogrammétrie suivant la revendication 1 ou 2, caractérisé en ce que les optiques secondaires (18, 20, 22) sont composées de plusieurs optiques individuelles en cascade (18', 18", 18'", 20', 20", 20'", 22', 22", 22'").

4. Appareil photographique de photogrammétrie suivant une des revendications 1 à 3, caractérisé en ce que les capteurs à haute définition (12, 14, 16) et les optiques secondaires (18, 20, 22) sont montés sur un dispositif de décalage commun (34) et peuvent être décalés ensemble.

5. Appareil photographique de photogrammétrie suivant une des revendications 1 à 3, caractérisé en ce que les capteurs à haute définition (12, 14, 16) et les optiques secondaires (18, 20, 22) sont montés sur des dispositifs de décalage séparés (34) et peuvent être décalés indépendamment.

6. Appareil photographique de photogrammétrie suivant une des revendications 1 à 5, caractérisé en ce que les capteurs à haute définition (12, 14, 16) sont prévus en lignes CCD.

7. Appareil photographique de photogrammétrie suivant une des revendications 1 à 5, caractérisé en ce que les capteurs à haute définition (12, 14, 16) sont prévus en surfaces CCD.

8. Appareil photographique de photogrammétrie suivant une des revendications 1 à 7, caractérisé en ce qu'à l'optique primaire, sont affectés des dispositifs de mesure de couches volumétriques.

9. Appareil photographique de photogrammétrie suivant la revendication 8, caractérisé en ce que les dispositifs de mesure de couches volumétriques (38) sont constitués d'au moins trois, de préférence quatre dispositifs de mesure de distances à haute résolution (40, 42, 44, 46) placés régulièrement sur une surface latérale qui est coaxiale à l'axe optique (26) de l'optique primaire.

10. Appareil photographique de photogrammétrie suivant une des revendications 1 à 9, caractérisé en ce que les dispositifs de mesure de distance (28, 30, 40, 42, 44, 46) sont constitués par des transmetteurs de position pour la détermination de la position d'un détecteur (48) par rapport à une surface positionnable (50), avec des surfaces positionnables (50) sur le(s) optique(s) secondaire(s) (18, 20, 22), les capteurs à haute définition (12, 14, 16) et l'optique primaire (10) et les arrangements de détecteurs (48) sur une enceinte commune (52) ou renversé, sur les surfaces positionnables (50), dans deux directions de coordonnées (X, Y), des marques (54, 56) étant placées à distance constante avec un codage absolu, et ces marques (54, 56) faisant face aux détecteurs (58, 60), les détecteurs (58, 60) étant reliés à une calculateur de coordonnées et les détecteurs (58, 60) comprenant respectivement un dispositif de mesure d'angle (64) au moyen duquel sont déterminés les angles de projection ($\alpha$,$\beta$) ayant pour sommet un point de référence (O_M) du dispositif de mesure d'angle (64) de chaque détecteur (58; 60) et compris entre au moins trois marques au voisinage (A, B, C), et le calculateur (62) étant commandé pour qu'il calcule les coordonnées (X0 ou Y0, et Z0 qui correspond) de chaque point de référence (O_M) suivant des fonctions trigonométriques.

11. Appareil photographique de photogrammétrie suivant la revendication 10, caractérisé en ce que le calculateur (64) utile comme fonctions trigonométriques les fonctions ou équations suivantes:

$$X_0; Y_0 = \frac{\Delta * (Z_1^2 - Z2^2)}{(Z_1 - Z2)^2 + \Delta^2}$$

$$Z_0 = \frac{\Delta^2 * (Z1 + Z2)}{(Z1 - Z2)^2 + \Delta^2}$$

avec

$$Z_1 = \frac{\Delta}{2 * tg \cdot \alpha}$$

avec

$$Z_2 = \frac{\Delta}{2 * tg \cdot \beta}$$

$\alpha$ étant l'angle de projection ayant pour sommet un point de référence correspondant et compris entre une première et une deuxième marques voisines, $\beta$ étant l'angle de projection ayant pour sommet le point de référence correspondant et compris entre une deuxième et une troisième marques vosines, $\Delta$

étant la distance entre deux marques voisines, et X0, Y0, Z0 étant les coordonnées du point de référence correspondant par rapport à la surface positionnable.

FIG.1

FIG. 2

FIG. 3

FIG. 4

FIG. 5

FIG.6